# EUROPÄISCHE PATENTSCHRIFT

(11) **EP 2 522 451 B1**
(45) Veröffentlichungstag und Bekanntmachung des Hinweises auf die Patenterteilung: **01.03.2017**
(21) Anmeldenummer: 12163102.2
(22) Anmeldetag: 04.04.2012
(51) Int. Cl.: B23G 7/02, B23G 7/00

(54) **Verfahren zum Ausformen eines Innengewindes sowie Kombination aus einem Grundkörper mit einer Ausnehmung und einem Gewindeschneider**
Method for forming an internal thread and a combination of a base body with a recess and a thread cutter
Procédé de démoulage d'un filetage intérieur et combinaison composée d'un corps de base avec un creux et un outil à fileter

(30) Priorität: 12.05.2011 DE 102011075770
(43) Veröffentlichungstag der Anmeldung: 14.11.2012
(73) Patentinhaber: HILTI Aktiengesellschaft, 9494 Schaan (LI)
(72) Erfinder: Floeter, Felix, 30449 Hannover (DE)
(74) Vertreter: Hilti Aktiengesellschaft Corporate Intellectual Property

(56) Entgegenhaltungen:
- EP-A1- 2 218 536
- DE-A1-102005 019 426
- DE-A1-102010 054 476
- DE-B- 1 176 450
- US-A- 3 359 581
- US-A- 4 449 868

## Beschreibung

Die Erfindung betrifft ein Verfahren zum Ausformen eines Innengewindes in einer im Wesentlichen zylindrischen Aufnahme eines Grundkörpers, die eine Mittelachse hat, mittels eines Gewindeschneiders, wobei die zylindrische Aufnahme zumindest eine im Wesentlichen in Längsrichtung verlaufende Nut aufweist, deren Tiefe von der Mittelachse aus gemessen größer ist als oder gleich ist wie der Außenradius des Gewindeschneiders, wobei in Umfangsrichtung nach der Nut im Grundkörper ein radial einwärts und axial verlaufender Vorsprung vorgesehen ist. Des Weiteren betrifft die Erfindung eine Kombination aus einem Grundkörper mit einer zylindrischen Aufnahme, die zumindest eine im Wesentlichen in Längsrichtung verlaufende Nut aufweist, und einem Gewindeschneider.

Zum Ausbilden eines Innengewindes in der Aufnahme eines Grundkörpers, beispielsweise eines Betonankers, sind verschiedene Herstellungsverfahren bekannt. Üblicherweise werden solche Gewinde mit einem Gewindeschneider eingebracht, der in die Aufnahme eingeschraubt wird und während des Einschraubvorgangs das Gewinde schneidet. Der Gewindeschneider kann dabei pro Umdrehung des Gewindeschneiders nur eine Gewindeumdrehung, also einen um 360° umlaufenden Gewindeabschnitt schneiden. Zur Herstellung eines längeren Gewindes sind also entsprechend viele Umdrehungen des Gewindeschneiders erforderlich. Ebenso muss ein solches Gewindeschneidwerkzeug nach Fertigstellung des Gewindes über die gesamte Länge des Gewindes aus diesem herausgedreht werden.

Um diesen Vorgang zu beschleunigen, ist aus der EP 2 218 536 A1 ein Gewindeschneider bekannt, der mehrere in axialer Richtung hintereinander angeordnete, radial vorstehende Schneidkanten aufweist, wobei die Anzahl der Schneidkanten mit der Anzahl der gewünschten Gewindeumdrehungen übereinstimmt. Das zu bearbeitende Werkstück hat eine Aufnahme mit zumindest einer in Längsrichtung verlaufenden, zu den Schneidkanten korrespondierenden Nut. Der Gewindeschneider kann in die Aufnahme eingeschoben werden, wobei die Schneidkanten des Gewindeschneiders dabei in die Nut eingeführt werden.

Zum Schneiden des Gewindes wird der Gewindeschneider anschließend um seine Längsachse gedreht. Dabei schneidet jede der Schneidkanten von der Nut ausgehend eine vollständige Gewindeumdrehung des Gewindes, bis sich die Schneidkanten nach einer Umdrehung um 360° wieder in der Nut befinden. Anschließend kann der Gewindeschneider in axialer Richtung wieder aus der Aufnahme gezogen werden. Die gesamte Länge des Gewindes wird also mit einer einzigen Umdrehung des Gewindeschneiders geschnitten. Dies ermöglicht eine wesentlich schnellere Herstellung eines Gewindes. Problematisch bei dieser Herstellung ist, dass eine sehr hohe Kraft benötigt wird, um das Gewinde zu schneiden.

Weitere ähnliche Gewindeschneider sind aus der US 3 359 581 A1, der DE 11 76 450 B, der US 4 449 868 A und der DE 10 2010 054476 A1 bekannt. Die DE 10 2005 019426 A1 beschreibt ein kombiniertes Bohr- und Gewindeformwerkzeug.

Aufgabe der Erfindung ist es, den Kraftbedarf beim Schneiden eines Gewindes zu reduzieren.

Die Aufgabe wird durch ein Verfahren nach Anspruch 1 gelöst.

Zur Lösung der Aufgabe wird bei dem eingangs genannten Verfahren ein Gewindeschneider verwendet, welcher eine axiale Längsausnehmung besitzt, an die in Umfangsrichtung radial auswärts vorstehende Schneiden mit Schneidkanten angrenzen, wobei in Längsrichtung an der Längsausnehmung mehrere hintereinanderliegende Schneidkanten vorgesehen sind, die in Umfangsrichtung versetzt zueinander angeordnet sind, wobei der Gewindeschneider mehrere axial verlaufende, gleichmäßig auf dem Außenumfang verteilte Längsausnehmungen aufweist und zwischen zwei benachbarten Längsausnehmungen jeweils ein Satz Schneidkanten vorgesehen ist, wobei die Schneidkanten eines Schneidkantensatzes in Umfangsrichtung versetzt zueinander angeordnet sind. Beim Drehen des Schneidwerkzeugs um maximal 360° zur Ausformung des gesamten Innengewindes in dem Vorsprung dringen die Schneidkanten beim Drehen des Gewindeschneiders nacheinander in den Vorsprung ein. Dies bietet den Vorteil, dass zuerst nur eine oder wenige Schneidkanten an dem Vorsprung anliegen und sich in diesen einschneiden. Erst wenn sich diese Schneidkanten in den Vorsprung eingeschnitten haben, gelangen weitere Schneidkanten in Anlage mit dem Vorsprung und schneiden sich in diesen ein. Der Kraftanstieg beim Drehen des Werkzeugs erfolgt langsamer und gleichmäßiger, sodass große Kraftspitzen vor allem zu Beginn des Schneidvorgangs vermieden werden können. Da die benötigte Kraft zum Einschneiden einer Schneidkante zu Beginn des Schneidvorgangs am größten ist und diese durch einzelne Schneidkanten hervorgerufene Belastungsspitzen verteilt werden, ist auch die maximal benötigte Kraft zum Schneiden des Gewindes wesentlich geringer als bei einem herkömmlichen Gewindeschneider.

Die zylindrische Aufnahme bzw. das Schneidwerkzeug ist vorzugsweise so ausgebildet, dass der Gewindeschneider in einer geradlinigen Bewegung in die Aufnahme eingeführt wird. Das heißt, beim Einführen des Gewindeschneiders erfolgt keine Drehbewegung, sodass ein einfaches und schnelles Einführen des Gewindeschneiders möglich ist. Dieser muss nur zu Beginn des Verfahrens so ausgerichtet werden, dass die Schneidkanten in die Nuten eingeschoben werden können. Anschließend wird der Gewindeschneider in einer geradlinigen Bewegung vollständig in die Aufnahme eingeschoben, gedreht, und anschließend ebenfalls in einer geradlinigen Bewegung aus der Aufnahme heraus bewegt.

Alternativ kann die Nut der Aufnahme aber auch wendelförmig in der Aufnahme verlaufen, und der Gewindeschneider wird beim Einführen des Gewindeschneiders der Nut folgend gedreht, wobei insbesondere die Schneidkanten beim Einführen nicht in Kontakt mit der Aufnahme gelangen. Dadurch ist die durch die Nut gebildete Unterbrechung einer Gewindeumdrehung jeweils in Umfangsrichtung versetzt, wodurch eine bessere Lastübertragung von einem in den Grundkörper eingedrehten Lastübertragungsmittel auf den gesamten Umfang der Aufnahme möglich ist. Der Versatz der Schneidkanten in Umfangsrichtung ist dabei so gewählt, dass diese eine andere Krümmung aufweisen als die Krümmung der Nut, sodass auch hier die Schneidkanten nicht gleichzeitig am Vorsprung anliegen und nacheinander in den Vorsprung eindringen.

Die Schneidkanten können beispielsweise so angeordnet sein, dass diese zumindest abschnittsweise in einer Seitenansicht des Gewindeschneiders auf einer Geraden liegen. Die Schneidkanten können hier beispielsweise Gruppen bilden, wobei die Schneidkanten jeder Gruppe jeweils auf einer Geraden liegen. Die Geraden der einzelnen Gruppen können dabei parallel zueinander liegen, sodass die Schneidkanten gewissermaßen ein Sägezahnmuster bilden. In dieser Ausführungsform ist es auch denkbar, dass jeweils eine erste Schneidkante jeder Gruppe gleichzeitig in den Vorsprung eindringt. Es ist aber auch denkbar, dass alle Schneidkanten auf einer gemeinsamen Geraden liegen, also jeweils nur eine Schneidkante in den Vorsprung eindringen kann.

Die Schneidkanten müssen aber nicht zwingend auf einer Geraden liegen. Es ist beispielsweise auch denkbar, dass die Schneidkanten zumindest abschnittsweise eine zur Längsrichtung der Aufnahme verlaufende, gleichmäßige Wendel bilden. Die Schneidkanten können auch auf einer gekrümmten Kurve liegen.

Der Gewindeschneider kann auch mehrere in Umfangsrichtung versetzte Längsausnehmungen aufweisen. Die Aufnahme hat in einer solchen Ausführungsform eine korrespondierende Anzahl Vorsprünge. Dadurch ist es möglich, dass ein vollständiges Gewinde auch mit einer geringeren Drehung gebildet wird. Sind beispielsweise zwei Längsausnehmungen vorgesehen, die einander gegenüberliegen, kann in einen entsprechenden Grundkörper, der zwei mit den Längsausnehmungen korrespondieren Nuten aufweist, mit einer Drehung um 180° ein vollständiges Gewinde gebildet wird. Mit einer entsprechenden Anzahl gleichmäßig verteilter Nuten kann die Drehung des Schneidwerkzeugs weiter reduziert werden.

Vorzugsweise ist in Umfangsrichtung ein Spiel zwischen dem Vorsprung und der angrenzenden Längsausnehmung vorhanden, welches maximal dem 2-fachen der axialen Höhe der Schneiden am Gewindeschneider entspricht.

Erfindungsgemäß ist des Weiteren eine Kombination aus einem Grundkörper mit einer Aufnahme und aus einem Gewindeschneider vorgesehen, wobei die Aufnahme des Grundkörpers eine im Wesentlichen in Längsrichtung verlaufende Nut aufweist, deren Tiefe von der Mittelachse aus gemessen größer ist als oder gleich groß ist wie der Außenradius des Gewindeschneiders. In Umfangsrichtung nach der Nut ist ein radial und axial verlaufender Vorsprung vorgesehen. Der Gewindeschneider besitzt eine axiale Ausnehmung, an die in Umfangsrichtung radial auswärts vorstehende Schneiden mit Schneidkanten angrenzen, die in Längsrichtung an der Längsausnehmung hintereinander liegen und in Umfangsrichtung versetzt zueinander angeordnet sind, wobei der Gewindeschneider mehrere axial verlaufende, gleichmäßig auf dem Außenumfang verteilte Längsausnehmungen aufweist und zwischen zwei benachbarten Längsausnehmungen jeweils ein Satz Schneidkanten vorgesehen ist, wobei die Schneidkanten eines Schneidkantensatzes in Umfangsrichtung versetzt zueinander angeordnet sind. Der Abstand der hintereinander liegenden Schneidkanten entspricht dem Abstand der gewünschten Gewindehöhe.

Vorzugsweise entspricht die Anzahl der Schneidkanten der Anzahl der erzeugten Gewindegänge. Das heißt, mit einer Umdrehung des Gewindeschneiders wird das gesamte Gewinde geschnitten.

Zwischen dem Vorsprung und der angrenzenden Längsausnehmung ist vorzugsweise in Umfangsrichtung ein Spiel vorhanden, welches maximal dem 2-fachen der axialen Höhe der Schneiden am Gewindeschneider entspricht.

Weitere Vorteile und Merkmale ergeben sich aus der nachfolgenden Beschreibung in Verbindung mit den beigefügten Zeichnungen. In diesen zeigen:
- Figur 1 einen Gewindeschneider gemäß dem Stand der Technik mit einem Grundkörper,
- Figur 2 den Gewindeschneider aus Figur 1 in eingeschobenem Zustand im Grundkörper,
- Figur 3 eine Seitenansicht eines Gewindeschneiders als Teil der erfindungsgemäßen Kombination,
- Figur 4 eine Detailansicht des Gewindeschneiders aus Figur 3,
- Figur 5 eine perspektivische Ansicht des Gewindeschneiders aus Figur 3,
- Figur 6 eine axiale Draufsicht auf den Gewindeschneider aus Figur 3,
- Figur 7 eine Detailansicht einer zweiten Ausführungsform eines bei der Erfindung eingesetzten Gewindeschneiders,
- Figur 8 eine dritte Ausführungsform eines bei der Erfindung eingesetzten Gewindeschneiders,
- Figur 9 eine vierte Ausführungsform eines bei der Erfindung eingesetzten Gewindeschneiders, und
- Figur 10 eine Schnittansicht durch einen Grundkörper und einen Gewindeschneider gemäß der Erfindung.

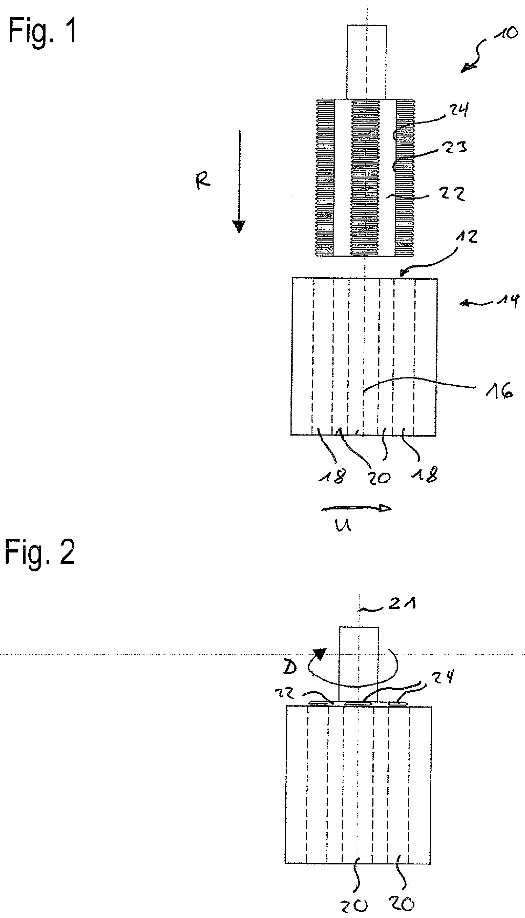

In den Figuren 1 und 2 ist ein herkömmlicher Gewindeschneider 10 zum Schneiden eines Innengewindes in einer lochartigen Aufnahme 12 eines Grundkörpers 14 gezeigt. Die lochartige Aufnahme 12 ist im Wesentlichen zylindrisch ausgebildet und weist eine Mittelachse 16 auf. Des Weiteren weist die Aufnahme 12 mehrere, gleichmäßig auf dem Innenumfang verteilte, axial verlaufende Nuten 18 auf. In Umfangsrichtung U betrachtet ist hinter jeder Nut ein radial einwärts und ebenfalls axial verlaufender Vorsprung 20 vorgesehen.

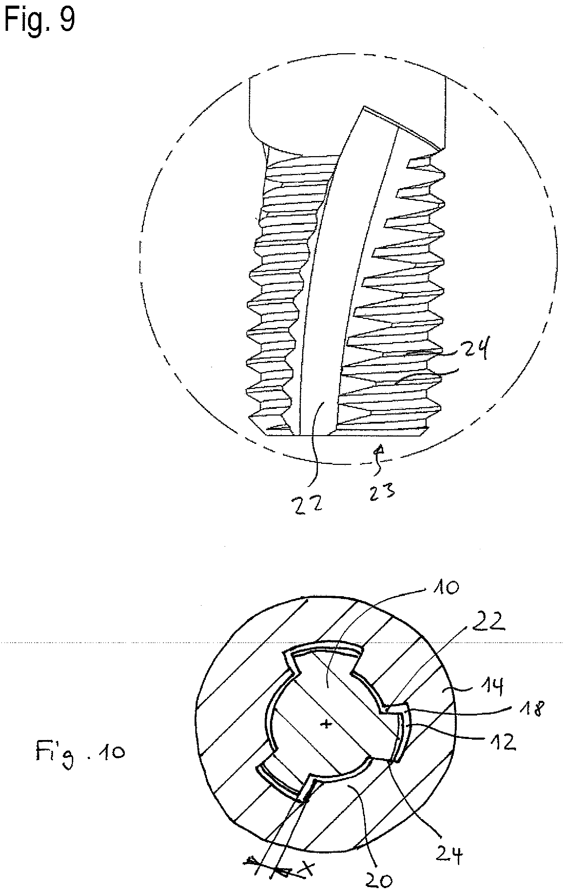

Die Tiefe der Nuten 18 ist von der Mittelachse 16 aus gemessen größer als oder gleich groß wie der Außenradius des gewünschten Gewindes und, wie im Folgenden gezeigt wird, größer als oder gleich groß ist wie der Außenradius des Gewindeschneiders 10 (siehe auch Figur 10).

Der Gewindeschneider 10 hat eine mit der Mittelachse 16 zusammenfallende Längsachse 21 und mehrere axial verlaufende, gleichmäßig auf dem Außenumfang verteilte Längsausnehmungen 22, wobei die Anzahl der Längsausnehmungen 22 der Anzahl der Vorsprünge 20 des Grundkörpers 14 entspricht. Zwischen zwei benachbarten Längsausnehmungen 22 ist jeweils ein Satz Schneidkanten 24 vorgesehen, wobei hier jeweils an jeder Längsausnehmung 22 mehrere in Längsrichtung hintereinanderliegende Schneidkanten 24 vorgesehen sind. Die Anzahl der Schneidkanten 24 entspricht der Anzahl der gewünschten Gewindeumdrehungen im Grundkörper 14.

Zum Ausformen des Innengewindes wird der Gewindeschneider 10 in einer geradlinigen Bewegung in eine Einschubrichtung R in die Aufnahme 12 des Grundkörpers 14 eingeschoben (Figur 2). Ist der Gewindeschneider 10 in der gewünschten Tiefe in die Aufnahme 12 eingeschoben, wird der Gewindeschneider 10 um seine Längsachse gedreht, wobei sich die Schneidkanten 24 in den in Drehrichtung D benachbarten Vorsprung 20 einschneiden und in diesem einen Teil des gewünschten Gewindes ausbilden. Der Gewindeschneider wird so weit gedreht, bis sich die Schneidkanten 24 in der in Drehrichtung D nachfolgenden Nut 18 befinden.

Jeder der Schneidkantensätze 23 hat bei dieser Drehung an dem jeweils in Drehrichtung D nachfolgenden Vorsprung 20 einen Teil des Gewindes eingeschnitten. Da jedem Vorsprung 20 ein Schneidkantensatz 23 zugeordnet ist, ist in die gesamte Aufnahme 12 ein umlaufendes Gewinde eingeschnitten.

Da sich die Schneidkanten 24 nach dem Schneidvorgang wieder in einer Nut 18 befinden, kann der Gewindeschneider 10 mit einer linearen Bewegung in Richtung der Mittelachse 16 der Aufnahme 12 aus der Aufnahme 12 entnommen werden.

Die Anzahl der Nuten 18 bzw. der Vorsprünge 20 in der Aufnahme kann beliebig variiert werden, wobei auf eine gleichmäßige Verteilung in Umfangsrichtung geachtet werden muss, damit nach dem Drehen und Ausbilden des Gewindes alle Schneidkanten 24 wieder in einer Nut 18 liegen und der Gewindeschneider 10 der Aufnahme 12 entnommen werden kann. Der Gewindeschneider 10 kann eine entsprechend angepasste Anzahl Schneidkanten 24 aufweisen, wobei der Drehwinkel zwischen Einschieben und Herausbewegen des Gewindeschneiders 10 jeweils dem Winkel zwischen zwei Vorsprüngen 20 entspricht. Der maximale Drehwinkel beträgt bei diesem Schneidverfahren bei nur einer Nut 360°, um ein vollständiges Gewinde in der Aufnahme 12 auszuformen.

Bei dem in den Figuren 1 und 2 gezeigten Gewindeschneider 10 liegen die Schneidkanten 24 eines Schneidkantensatzes 23 alle in axialer Richtung betrachtet hintereinander. Dadurch liegen die Schneidkanten 24 bei einer Drehung in Drehrichtung D alle gleichzeitig an den benachbarten Vorsprüngen an und dringen in diese ein. Dies hat den Nachteil, dass eine sehr hohe Kraft aufgewendet werden muss, um der Gewindeschneider 10 zu drehen.

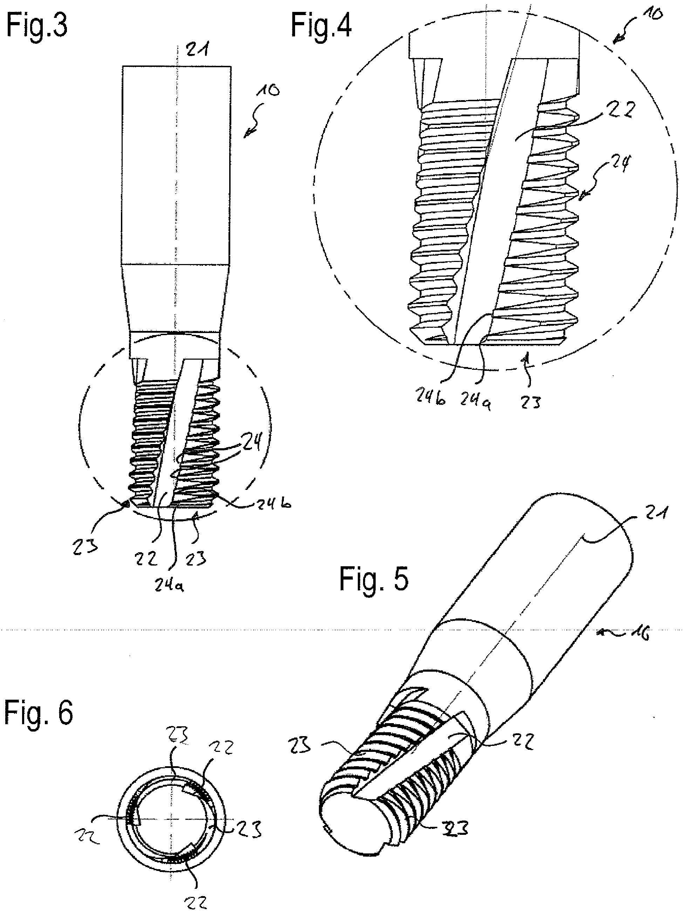

Um diesen Nachteil zu beheben, sind bei einem Gewindeschneider 10 für das erfindungsgemäße Verfahren, wie er in einer ersten Ausführungsform in den Figuren 3 bis 6 dargestellt ist, die Schneidkanten 24 in Umfangsrichtung versetzt zueinander angeordnet. In den Figuren ist der Versatz in Umfangsrichtung zur Verdeutlichung übertrieben groß dargestellt.

Die Längsausnehmungen 22 des hier gezeigten Gewindeschneiders 10 bilden jeweils eine in Richtung der Längsachse 21 des Gewindeschneiders 10 ansteigende Wendel, wobei die Schneidkanten 24 dem Verlauf der Längsausnehmung 22 folgen. In dieser Ausführungsform sind die Vorsprünge 20 bzw. die Nuten 18 der Aufnahme 12 des Grundkörpers 14 ebenfalls wendelartig ausgebildet, sodass der Gewindeschneider 10 mit einer leichten Drehung in die Aufnahme 12 eingeführt wird. Die Steigung der Wendel der Nuten 18 bzw. der Vorsprünge 20 weicht dabei von der Steigung der Längsausnehmung 22 des Schneidwerkzeugs ab, sodass die Schneidkanten 24 nicht gleichzeitig am jeweiligen Vorsprung 20 anliegen können.

Im vorliegenden Fall liegt bei einer Drehung in Drehrichtung D zu Beginn des Drehvorgangs jeweils nur eine erste Schneidkante 24a eines Schneidkantensatzes 23 am jeweiligen Vorsprung 20 an. Erst wenn der Gewindeschneider 10 weiter in Drehrichtung D gedreht wird und die Schneidkante 24a in den Vorsprung eingedrungen ist, kann die nächste Schneidkante 24b dieses Schneidkantensatzes 23 mit dem Vorsprung 20 in Anlage gelangen und beim weiteren Drehen in diesen eindringen.

Dadurch ist ein wesentlich geringerer Kraftaufwand zum Drehen des Gewindeschneiders 10 erforderlich. Insbesondere erfolgt zu Beginn des Drehvorgangs ein langsamerer Kraftanstieg, da die Schneidkanten nur nacheinander mit dem Bauteil in Anlage kommen und somit die benötigte Kraft zum Drehen des Gewindeschneiders 10 langsam ansteigt.

Die Längsausnehmung 22 des Gewindeschneiders 10 könnte abweichend von der hier gezeigten Ausführungsform aber auch so verlaufen, dass ein geradliniges Einschieben des Gewindeschneiders 10 in die Aufnahme ohne eine Drehbewegung möglich ist. In diesem Fall würde der Winkel, den die Längsausnehmung mit der Mittelachse 16 des Gewindeschneiders 10 bildet, wesentlich geringer ausfallen. Es ist lediglich erforderlich, dass die Schneidkanten 24 in Umfangsrichtung versetzt angeordnet sind, sodass diese nicht gleichzeitig mit dem jeweils angrenzenden Vorsprung 20 in Anlage kommen, sondern sich nacheinander in diesen einschneiden.

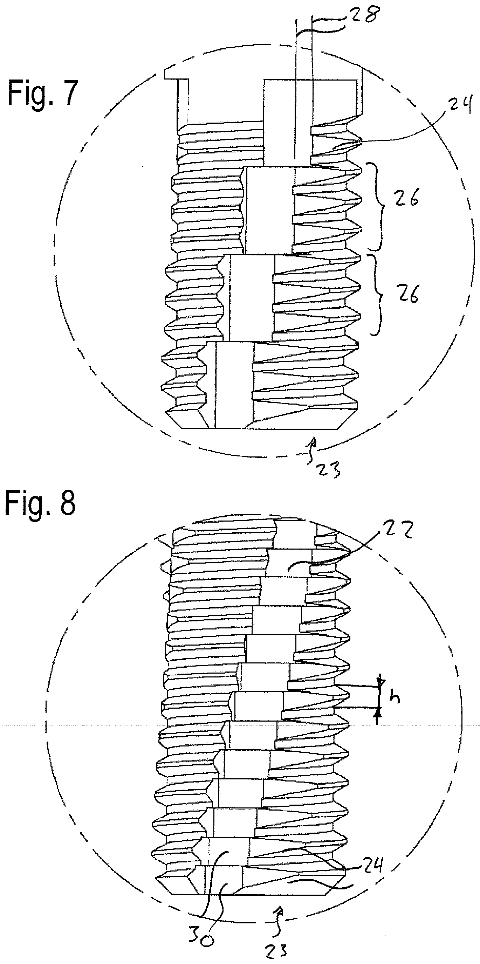

Die Längsausnehmung kann statt der in den Figuren 3 bis 6 dargestellten Ausführungsform auch gestuft verlaufen, wobei einzelne Gruppen 26 der Schneidkanten 24 eines Schneidkantensatzes 23 zusammengefasst sind und jeweils auf einer Geraden 28 liegen. In der in Figur 7 dargestellten Ausführungsform sind die Stufen der Längsausnehmung 22 so ausgebildet, dass die einzelnen Schneidkanten 24 einer Gruppe 26 jeweils auf einer in Längsrichtung des Gewindeschneiders 10 verlaufenden Geraden 28 angeordnet sind, wobei die Geraden 28 parallel zueinander verlaufen.

In der in Figur 8 dargestellten Ausführungsform verläuft die Längsausnehmung 22 gestuft, wobei auf jeder Stufe 30 eine Schneidkante 24 angeordnet ist.

In der in Figur 9 dargestellten Ausführungsform eines Gewindeschneiders 10 hat die Längsausnehmung 22 einen nichtlinearen Verlauf, wobei die Krümmung der Längsausnehmung 22 entgegen der Einschubrichtung R zunimmt.

Figur 10 zeigt die Schnittansicht durch eine erfindungsgemäße Kombination, wobei hier die Nuten 18, Vorsprünge 20 und die Schneidkanten 24 leichter zu erkennen sind. Zwischen Vorsprung 20 und Längsausnehmung 22 ist ein maximales Spiel X vorgesehen, welches maximal dem 2-fachen der axialen Höhe h der Schneiden entspricht. Dies hat sich als vorteilhaft für die Spanaufnahme herausgestellt.

## Patentansprüche

1. Verfahren zum Ausformen eines Innengewindes in einer im Wesentlichen zylindrischen Aufnahme (12) eines Grundkörpers (14), die eine Mittelachse (16) hat, mittels eines Gewindeschneiders (10), wobei die zylindrische Aufnahme (12) zumindest eine im Wesentlichen in Längsrichtung (R) verlaufende Nut (18) aufweist, deren Tiefe von der Mittelachse aus gemessen größer oder gleich groß ist wie der Außenradius des Gewindeschneiders (10), wobei in Umfangsrichtung (U) nach der Nut (18) im Grundkörper ein radial einwärts und axial verlaufender Vorsprung (20) vorgesehen ist, **gekennzeichnet durch** folgende Schritte:
a) Einführen des Gewindeschneiders (10), welcher eine axiale Längsausnehmung (22) besitzt, an die in Umfangsrichtung (U) radial auswärts vorstehende Schneiden mit Schneidkanten (24) angrenzen, in die Aufnahme (12), wobei an der Längsausnehmung (22) mehrere in Längsrichtung (R) hintereinanderliegende Schneidkanten (24) vorgesehen sind, wobei zumindest einige Schneidkanten (24) in Umfangsrichtung (U) versetzt zueinander angeordnet sind, und wobei beim Einführen des Gewindeschneiders (10) die Schneidkanten (24) in die Nut (18) eingeschoben werden,
b) Drehen des Gewindeschneiders (10) um maximal 360° zur Ausformung des gesamten Innengewindes in dem Vorsprung (20), wobei die Schneidkanten (24) beim Drehen des Gewindeschneiders (10) nacheinander in den Vorsprung (20) eindringen, und
c) axiales Herausbewegen des Gewindeschneiders (10) aus der Aufnahme (12),
wobei der Gewindeschneider (10) mehrere axial verlaufende, gleichmäßig auf dem Außenumfang verteilte Längsausnehmungen (22) aufweist und zwischen zwei benachbarten Längsausnehmungen (22) jeweils ein Satz (23) Schneidkanten (24) vorgesehen ist, **dadurch** gekennzeichnet dass die Schneidkanten (24) eines Schneidkantensatzes (23) in Umfangsrichtung versetzt zueinander angeordnet sind.

2. Verfahren nach Anspruch 1, **dadurch gekennzeichnet, dass** der Gewindeschneider (10) in einer geradlinigen Bewegung in die Aufnahme (12) eingeführt wird.

3. Verfahren nach Anspruch 1, **dadurch gekennzeichnet, dass** die Nut (18) der Aufnahme (12) wendelförmig in der Aufnahme (12) verläuft und der Gewindeschneider (10) beim Einführen des Gewindeschneiders (10) der Nut (18) folgend gedreht wird, wobei insbesondere die Schneidkanten (24) beim Einführen nicht in Kontakt mit der Aufnahme (12) gelangen.

4. Verfahren nach einem der vorhergehenden Ansprüche, **dadurch gekennzeichnet, dass** die Schneidkanten (24) zumindest abschnittsweise in Seitenansicht des Gewindeschneiders (10) auf einer Geraden liegen.

5. Verfahren nach einem der Ansprüche 1 bis 3, **dadurch gekennzeichnet, dass** die Schneidkanten (24) zumindest abschnittsweise eine zur Längsrichtung (R) der Aufnahme (12) verlaufende, gleichmäßige Wendel bilden.

6. Verfahren nach einem der vorhergehenden Ansprüche, **dadurch gekennzeichnet, dass** der Gewindeschneider (10) mehrere in Umfangsrichtung (U) versetzte Längsausnehmungen (22) und die Aufnahme (12) mehrere entsprechende Vorsprünge (20) aufweist.

7. Verfahren nach einem der vorhergehenden Ansprüche, **dadurch gekennzeichnet, dass** in Umfangsrichtung (U) ein Spiel zwischen dem Vorsprung (20) und der angrenzenden Längsausnehmung (22) vorhanden ist, welches maximal dem 2-fachen der axialen Höhe der Schneiden am Gewindeschneider (10) entspricht.

8. Kombination aus einem Grundkörper (14) mit einer im Wesentlichen zylindrischen Aufnahme (12) und aus einem Gewindeschneider (10), wobei die Aufnahme (12) eine im Wesentlichen in Längsrichtung verlaufende Nut (18) aufweist, deren Tiefe von der Mittelachse (16) aus gemessen größer oder gleich ist wie der Außenradius des Gewindeschneiders (10), wobei in Umfangsrichtung nach der Nut (18) ein radial einwärts und axial verlaufender Vorsprung (20) vorgesehen ist, wobei der Gewindeschneider (10) eine axiale Längsausnehmung (22) besitzt, an die in Umfangsrichtung radial auswärts vorstehende Schneiden mit Schneidkanten (24) angrenzen, die in Längsrichtung (R) hintereinander liegen, deren Abstand der gewünschten Gewindehöhe entspricht und die in Umfangsrichtung versetzt zueinander angeordnet sind, wobei der Gewindeschneider (10) mehrere axial verlaufende, gleichmäßig auf dem Außenumfang verteilte Längsausnehmungen (22) aufweist und zwischen zwei benachbarten Längsausnehmungen (22) jeweils ein Satz (23) Schneidkanten (24) vorgesehen ist, **dadurch gekennzeichnet dass** die Schneidkanten (24) eines Schneidkantensatzes (23) in Umfangsrichtung versetzt zueinander angeordnet sind.

9. Kombination nach Anspruch 8, **dadurch gekennzeichnet, dass** die Anzahl der Schneidkanten (24) der Anzahl der erzeugten Gewindegänge entspricht.

10. Kombination nach Anspruch 8 oder 9, **dadurch gekennzeichnet, dass** in Umfangsrichtung (U) ein Spiel (X) zwischen dem Vorsprung (20) und der angrenzenden Längsausnehmung (22) vorhanden ist, welches maximal dem 2-fachen der axialen Höhe (h) der Schneiden am Gewindeschneider entspricht.

## Claims

1. Method of forming an internal thread in an essentially cylindrical receiver (12) in a body (14) by means of a thread cutter (10), the receiver having a centre axis (16), wherein the cylindrical receiver (12) has at least one groove (18) extending essentially in the longitudinal direction (R), the depth of which as measured from the centre axis is greater than or equal to the outer radius of the thread cutter (10), and wherein a radially inwardly and axially extending projection (20) is provided in the body downstream of the groove (18) in the circumferential direction (U), **characterised by** the following steps:
a) inserting the thread cutter (10) into the receiver (12), the thread cutter having an axial longitudinal recess (22) adjoined in the circumferential direction (U) by radially outwardly projecting blades with cutting edges (24), wherein a plurality of cutting edges (24) disposed one after the other in the longitudinal direction (R) are provided on the longitudinal recess (22), wherein at least some of the cutting edges (24) are arranged in such a manner that they are offset from one another in the circumferential direction (U) and wherein the cutting edges (24) are pushed into the groove (18) as the thread cutter (10) is inserted,
b) rotating the thread cutter (10) through a maximum of 360° in order to form the entire internal thread in the projection (20), wherein the cutting edges (24) penetrate into the projection (20) one after the other as the thread cutter (10) is rotated, and
c) moving the thread cutter (10) axially out of the receiver (12),
wherein the thread cutter (10) has a plurality of axially extending longitudinal recesses (22) distributed in a uniform manner over the outer circumference and a respective set (23) of cutting edges (24) is provided between every two adjacent longitudinal recesses (22), **characterised in that** the cutting edges (24) of a set (23) of cutting edges are arranged in such a manner that they are offset from one another in the circumferential direction.

2. Method according to claim 1, **characterised in that** the thread cutter (10) is inserted into the receiver (12) in a linear motion.

3. Method according to claim 1, **characterised in that** the groove (18) extends helically in the receiver (12) and the thread cutter (10) is rotated in such a manner that it follows the groove (18) as it is inserted, wherein, in particular, the cutting edges (24) do not come into contact with the receiver (12) during the insertion process.

4. Method according to one of the preceding claims, **characterised in that** the cutting edges (24) lie in a straight line at least in some areas when the thread cutter (10) is viewed from the side.

5. Method according to one of claims 1 to 3, **characterised in that** the cutting edges (24) at least in some areas form a uniform helix extending in the longitudinal direction (R) of the receiver (12).

6. Method according to one of the preceding claims, **characterised in that** the thread cutter (10) has a plurality of longitudinal recesses (22) offset in the circumferential direction (U) and the receiver (12) has a plurality of corresponding projections (20).

7. Method according to one of the preceding claims, **characterised in that** there is play between the projection (20) and the adjoining longitudinal recess (22) in the circumferential direction (U), this play corresponding to a maximum of twice the axial height of the blades on the thread cutter (10).

8. Combination of a body (14) with an essentially cylindrical receiver (12) and a thread cutter (10), wherein the receiver (12) has a groove (18) extending essentially in the longitudinal direction, the depth of which as measured from the centre axis (16) is greater than or equal to the outer radius of the thread cutter (10), wherein a radially inwardly and axially extending projection (20) is provided downstream of the groove (18) in the circumferential direction, wherein the thread cutter (10) has an axial longitudinal recess (22) adjoined in the circumferential direction by radially outwardly projecting blades with cutting edges (24), the cutting edges being disposed one after the other in the longitudinal direction (R) with a spacing corresponding to the desired thread height and being arranged in such a manner that they are offset from one another in the circumferential direction, and wherein the thread cutter (10) has a plurality of axially extending longitudinal recesses (22) distributed in a uniform manner over the outer circumference and a respective set (23) of cutting edges (24) is provided between every two adjacent longitudinal recesses (22), **characterised in that** the cutting edges (24) of a set (23) of cutting edges are arranged in such a manner that they are offset from one another in the circumferential direction.

9. Combination according to claim 8, **characterised in that** the number of cutting edges (24) corresponds to the number of thread turns produced.

10. Combination according to claim 8 or claim 9, **characterised in that** there is play (X) between the projection (20) and the adjoining longitudinal recess (22) in the circumferential direction (U), this play corresponding to a maximum of twice the axial height (h) of the blades on the thread cutter.

## Revendications

1. Procédé pour former un filetage intérieur dans un logement sensiblement cylindrique (12) d'un corps principal (14) ayant un axe central (16), au moyen d'un taraud (10), dans lequel le logement cylindrique (12) comporte au moins une rainure (18) s'étendant au moins sensiblement dans une direction longitudinale (R), dont la profondeur mesurée à partir de l'axe central est supérieure ou égale au rayon extérieur du taraud (10), dans lequel est prévue une saillie (20) s'étendant axialement et radialement vers l'intérieur dans une direction circonférentielle (U) après la rainure (18) dans le corps principal, **caractérisé en ce qu'**il comporte les étapes suivantes consistant à :
a) introduire dans le logement (12) le taraud (10) qui possède un évidement longitudinal axial (22) contigu à des tranchants faisant radialement saillie vers l'extérieur dans la direction circonférentielle (U) avec des arêtes tranchantes (24), plusieurs arêtes tranchantes (24) situées les unes derrière les autres dans la direction longitudinale (R) étant prévues sur l'évidement longitudinal (22), dans lequel au moins plusieurs arêtes tranchantes (24) sont agencées de manière décalée les unes par rapport aux autres dans la direction circonférentielle (U), et dans lequel les arêtes tranchantes (24) sont insérées dans la rainure (18) lors de l'introduction du taraud (10)
b) faire tourner le taraud (10) de 360° au maximum pour former le filetage intérieur complet dans la saillie (20), les arêtes tranchantes (24) pénétrant les unes à la suite des autres dans la saillie (20) lors de la rotation du taraud (10), et
c) extraire axialement le taraud (10) du logement (12),
dans lequel le taraud (10) comporte plusieurs évidements longitudinaux (22) s'étendant axialement et uniformément répartis sur la circonférence extérieure, et un groupe (23) d'arêtes tranchantes (24) est respectivement prévu entre deux évidements longitudinaux voisins (22), **caractérisé en ce que** les arêtes tranchantes (24) d'un groupe d'arêtes tranchantes (23) sont agencées de manière décalée les unes par rapport aux autres dans la direction circonférentielle.

2. Procédé selon la revendication 1, **caractérisé en ce que** le taraud (10) est introduit dans le logement (12) avec un mouvement linéaire.

3. Procédé selon la revendication 1, **caractérisé en ce que** la rainure (18) du logement (12) s'étend en hélice dans le logement (12) et le taraud (10) tourne après l'introduction du taraud (10) de la rainure (18), dans lequel les arêtes tranchantes (24) ne viennent surtout pas en contact avec le logement (12) pendant l'introduction.

4. Procédé selon l'une des revendications précédentes, **caractérisé en ce que** les arêtes tranchantes (24) sont, au moins dans certaines parties, sur une droite lorsqu'elles sont vues dans une vue latérale du taraud (10).

5. Procédé selon l'une des revendications 1 à 3, **caractérisé en ce que** les arêtes tranchantes (24) forment, au moins dans certaines parties, une hélice constante s'étendant dans la direction longitudinale (R) du logement (12).

6. Procédé selon l'une des revendications précédentes, **caractérisé en ce que** le taraud (10) comporte plusieurs évidements longitudinaux (22) décalés dans la direction circonférentielle (U) et le logement (12) comporte plusieurs saillies (20) correspondantes.

7. Procédé selon l'une des revendications précédentes, **caractérisé en ce qu'**il existe un jeu entre la saillie (20) et l'évidement longitudinal contigu (22) dans la direction circonférentielle (U), lequel jeu correspond au maximum au double de la hauteur axiale des tranchants sur le taraud (10).

8. Combinaison d'un corps principal (14) ayant un logement sensiblement cylindrique (12) et d'un taraud (10), dans laquelle le logement (12) comporte une rainure (18) s'étendant sensiblement dans la direction longitudinale, dont la profondeur mesurée à partir de l'axe central (16) est supérieure ou égale au rayon extérieur du taraud (10), dans laquelle est prévue une saillie (20) s'étendant axialement et radialement vers l'intérieur dans la direction circonférentielle après la rainure (18), dans laquelle le taraud (10) possède un évidement longitudinal axial (22) contigu à des tranchants faisant radialement saillie vers l'extérieur dans la direction circonférentielle après la rainure (18) avec des arêtes tranchantes (24), dont la distance correspond à la hauteur de filet souhaitée et qui sont agencés de manière décalée les uns par rapport aux autres dans la direction circonférentielle, dans laquelle le taraud (10) comporte plusieurs évidements longitudinaux (22) s'étendant axialement et uniformément répartis sur la circonférence extérieur, et un groupe (23) d'arêtes tranchantes (24) est respectivement prévu entre deux évidements longitudinaux voisins (22), **caractérisée en ce que** les arêtes tranchantes (24) d'un groupe d'arêtes tranchantes (23) sont agencées de manière décalée les unes par rapport aux autres dans la direction circonférentielle.

9. Combinaison selon la revendication 8, **caractérisée en ce que** le nombre d'arêtes tranchantes (24) correspond au nombre des filets de vis produits.

10. Combinaison selon la revendication 8 ou 9, **caractérisée en ce qu'**il existe un jeu (X) entre la saillie (20) et l'évidement longitudinal adjacent (22) dans la direction circonférentielle (U), lequel jeu correspond au maximum au double de la hauteur axiale (h) des tranchants sur le taraud.
